# EUROPEAN PATENT APPLICATION

(11) **EP 4 290 626 A1**
(43) Date of publication of application: **13.12.2023**
(21) Application number: 22738526.7
(22) Date of filing: 02.02.2022
(51) Int. Cl.: H01M 8/04, H01M 8/043, H01M 8/04537, H01M 8/04664, H01M 8/04746, H01M 8/04858

(54) **FUEL CELL SYSTEM**

(30) Priority: 05.02.2021 JP 2021017123
(71) Applicant: Panasonic Intellectual Property Management Co., Ltd., Osaka-shi, Osaka 540-6207 (JP)
(72) Inventor: TAKAHASHI, Manabu, Osaka-shi, Osaka 540-6207 (JP); YAMAGUCHI, Shohei, Osaka-shi, Osaka 540-6207 (JP)
(74) Representative: Grünecker Patent- und Rechtsanwälte PartG mbB
(86) International application number: PCT/JP2022/003984
(87) International publication number: WO 2022/168848

(57) **Abstract**

A fuel cell system according to the present disclosure includes a hydrogen generator that generates a hydrogen-containing gas from a source gas, a source gas supplier that supplies the source gas to the hydrogen generator, an oxidant gas supplier that supplies an oxidant gas necessary for combustion, a fuel cell that generates power by using the hydrogen-containing gas based on a power generation command, a combustor that is configured to combust an off-fuel gas, which is the hydrogen-containing gas that has not used in the fuel cell, and heats the hydrogen generator, a measurement unit that measures a flame current in the combustor, and a control device that performs protection control for controlling at least one of a supply amount of the source gas by the source gas supplier, a supply amount of the oxidant gas by the oxidant gas supplier, and an output from the fuel cell in a case where the value of the flame current measured by the measurement unit becomes lower than a first predetermined value.

## Description

### TECHNICAL FIELD

The present disclosure relates to a fuel cell system that is unlikely to erroneously detect a combustion state of a combustor as a fire extinction state.

### BACKGROUND ART

PTL 1 discloses a fuel cell system that is unlikely to erroneously estimate a combustion state of a combustor as a fire extinction state by controlling a power generation output. This fuel cell system includes a fire extinction estimator that estimates whether a flame of a combustor is in a combustion state or in a fire extinction state and a control device that controls a power generation output of a fuel cell. In a case where the fire extinction estimator estimates that the flame is in the fire extinction state, the control device continues power generation of the fuel cell by controlling an output command value of the fuel cell to be higher than an output command value before the estimation as the fire extinction state. Alternatively, in a case where operation of the fuel cell system is stopped and then the fuel cell system is operated, the control device controls the output command value of the fuel cell to be higher than the output command value before the fire extinguishing state is estimated.

### Citation List

### Patent Literature

PTL 1: Unexamined Japanese Patent Publication No. 2013-137948

### SUMMARY OF THE INVENTION

A combustor is supplied with source gas and off-fuel gas, that is, hydrogen. During combustion of mixture gas of the source gas and hydrogen, a flame current is smaller than that during combustion of gas in which hydrogen is not mixed with the source gas. Based on this decrease in the flame current, there is a possibility of erroneous detection as the fire extinction state. In a case where countermeasure control such as a re-ignition operation is repeatedly performed as a result of erroneous detection as a fire extinction state, a risk of failure of an igniter, a circuit, and the like increases. In addition, when the frequency of stopping power generation based on erroneous detection increases, there arises a problem that a power generation time cannot be secured and energy saving performance deteriorates. The present disclosure provides a fuel cell system that performs protection control before determination as a fire extinction state.

A fuel cell system according to the present disclosure includes a hydrogen generator that generates a hydrogen-containing gas from a source gas, a source gas supplier that supplies the source gas to the hydrogen generator, an oxidant gas supplier that supplies an oxidant gas necessary for combustion, a fuel cell that generates power by using the hydrogen-containing gas based on a power generation command, a combustor that is configured to combust an off-fuel gas, which is the hydrogen-containing gas that has not used in the fuel cell and heats the hydrogen generator, a measurement unit that measures a flame current in the combustor, and a control device that performs protection control for controlling at least one of a supply amount of the source gas by the source gas supplier, a supply amount of the oxidant gas by the oxidant gas supplier, and an output from the fuel cell in a case where the value of the flame current measured by the measurement unit becomes lower than a first predetermined value.

The fuel cell system according to the present disclosure performs the protection control before estimating a fire extinction state, thereby reducing the number of times of performing a re-ignition operation, which is performed upon estimation as the fire extinction state. Therefore, a risk of failure of an igniter, a circuit, and the like can be reduced. Furthermore, the number of times of stoppage of power generation resulting from estimation of the fire extinction state is reduced. This makes it possible to stably continue power generation, thereby improving energy saving performance.

### BRIEF DESCRIPTION OF THE DRAWINGS

Fig. 1 is a configuration diagram of a fuel cell system according to a first exemplary embodiment.
Fig. 2 is a flowchart illustrating control of the fuel cell system according to the first exemplary embodiment.
Fig. 3 is an explanatory view for explaining a flame current value in the fuel cell system.
Fig. 4 is an explanatory view for explaining a source gas supply amount in the fuel cell system according to the first exemplary embodiment.
Fig. 5 is a flowchart illustrating protection control of a fuel cell system according to a second exemplary embodiment.
Fig. 6 is an explanatory view for explaining an oxidant gas supply amount in the fuel cell system according to the second exemplary embodiment.
Fig. 7 is a flowchart illustrating protection control of a fuel cell system according to a third exemplary embodiment.
Fig. 8 is an explanatory view for explaining an output value in the fuel cell system according to the third exemplary embodiment.

### DESCRIPTION OF EMBODIMENT

### (Knowledge and the like underlying the present disclosure)

At the time when the present inventors arrived at the present disclosure, there was a risk of erroneous detection as a fire extinction state even though combustion is proceeding smoothly in a case where the presence or absence of flame in a combustor in a fuel cell system is detected by using a rectification-type flame rod, which is a flame detection device widely and generally used in combustion equipment.

Specifically, in the case of a fuel cell system, source gas and off-fuel gas are supplied to a combustor. Normally, in a case where a power generation output of the fuel cell system is decreased, setting of the source gas flow rate and a reformer temperature is also decreased in accordance with a degree of the decrease. However, the temperature of the reformer does not decrease immediately, for example, due to a heat capacity of the reformer. As a result, the temperature of the reformer with respect to the source gas flow rate becomes higher than an appropriate value for a while, and reforming efficiency during that time becomes high, and a ratio of hydrogen in the off-fuel gas increases. This can cause a phenomenon that a value of an output current (flame current) of the flame rod decreases since hydrogen has a lower combustion temperature than, for example, methane contained in the source gas. In other words, the inventors found a problem that the fuel cell system erroneously detects that the combustor is in a fire extinction state even though combustion in the combustor smoothly continues, and constructed the subject matter of the present disclosure to solve the problem.

Therefore, the present disclosure provides a fuel cell system that controls a supply amount of a source gas, a supply amount of an oxidant gas, or an output of a fuel cell when a value of a flame current becomes lower than a first predetermined value.

Hereinafter, exemplary embodiments will be described in detail with reference to the drawings. However, unnecessarily detailed description may be omitted. For example, detailed description of already well-known matters and repeated description of substantially identical configurations may be omitted. This is to prevent the following description from becoming unnecessarily redundant, and to facilitate understanding of those skilled in the art.

Note that, the accompanying drawings and the following description are only presented to help those skilled in the art fully understand the present disclosure, and are not intended to limit the subject matters as claimed in the claims.

### (First exemplary embodiment)

### [1-1. Configuration]

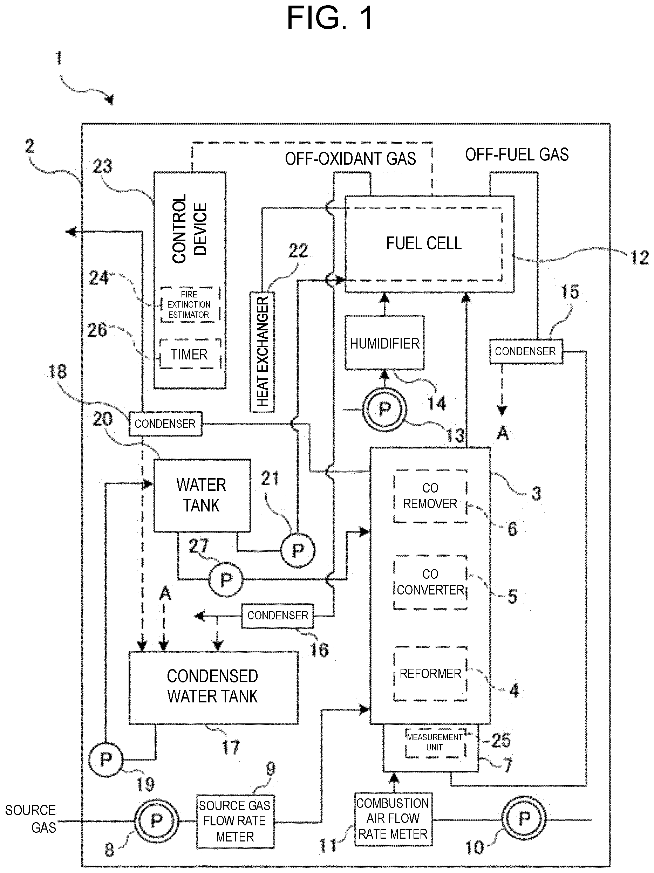

Fig. 1 illustrates a configuration of fuel cell system 1 according to a first exemplary embodiment of the present disclosure, and constituent elements of fuel cell system 1 are housed in housing 2. In Fig. 1, hydrogen generator 3 includes reformer 4 that reforms a source gas into a hydrogen-rich gas, CO converter 5 that transforms CO generated in reformer 4, and CO remover 6 that removes contained CO. Combustor 7 is provided to heat hydrogen generator 3 including reformer 4 to an appropriate temperature.

The source gas is supplied from an outside of the system, and is introduced into hydrogen generator 3 at an appropriate flow rate by source gas supplier 8 and source gas flow rate meter 9. Furthermore, air is supplied to combustor 7 at an appropriate flow rate by combustion air supplier 10 and combustion air flow rate meter 11 so that combustion in combustor 7 is in an optimum state.

Fuel gas generated in hydrogen generator 3 is supplied to an anode electrode (not illustrated) of fuel cell 12. Meanwhile, an oxidant gas outside housing 2 humidified to an appropriate dew point by humidifier 14 is supplied as an oxidant gas containing oxygen to a cathode electrode (not illustrated) of fuel cell 12 by oxidant gas supplier 13.

An off-fuel gas discharged from the anode electrode of fuel cell 12 is supplied to combustor 7 after heat is recovered by condenser 15 to separate condensed water. The condensed water separated from condenser 15 is collected in condensed water tank 17. Meanwhile, an off-oxidant gas discharged from the cathode electrode of fuel cell 12 is discharged to the outside of the system after heat is recovered by condenser 16 to separate condensed water. The condensed water separated from condenser 16 is collected in condensed water tank 17. Combustion exhaust gas discharged from hydrogen generator 3 is discharged to the outside of housing 2 after heat is recovered by condenser 18 to separate condensed water. The condensed water separated from condenser 18 is collected in condensed water tank 17.

The water collected in condensed water tank 17 is stored in water tank 20 by water supply pump 19. The water stored in water tank 20 is supplied as cooling water to fuel cell 12 by cooling water circulation pump 21, and heat generated during power generation in fuel cell 12 is recovered in circulating water. The heat recovered in the circulating water is accumulated in hot water stored in an external hot water storage tank (not illustrated) by heat exchanger 22. Furthermore, the heat recovered from condensers 15, 16, and 18 is also accumulated in the hot water stored in the external hot water storage tank.

Control device 23 is disposed inside housing 2. Control device 23 converts a DC current generated by fuel cell 12 into an AC current. Furthermore, control device 23 is also connected to various actuators used in fuel cell system 1 and controls these actuators. Fire extinction estimator 24 is provided inside control device 23.

Specifically, fuel cell system 1 includes hydrogen generator 3 that generates a hydrogen-containing gas from a source gas, source gas supplier 8 that supplies the source gas to hydrogen generator 3, oxidant gas supplier 13 that supplies an oxidant gas necessary for combustion, fuel cell 12 that generates power by using the hydrogen-containing gas on the basis of a power generation command, combustor 7 that is configured to combust an off-fuel gas that is a hydrogen-containing gas not used in fuel cell 12 and heats hydrogen generator 3, measurement unit 25 that measures a flame current in combustor 7, and control device 23 that performs protection control for controlling at least one of a supply amount of the source gas by the source gas supplier, a supply amount of the oxidant gas by the oxidant gas supplier, and an output from the fuel cell in a case where the value of the flame current measured by measurement unit 25 becomes lower than a first predetermined value.

Fuel cell system 1 further includes timer 26 that measures a protection execution time that is a time during which the protection control is executed. Furthermore, control device 23 controls at least one of source gas supplier 8, oxidant gas supplier 13, and fuel cell 12 in accordance with the protection execution time measured by timer 26.

The oxidant gas may be air. Measurement unit 25 may be a flame rod that detects a combustion state by using a change in flame current value, specifically, a change in electric resistance value caused by action of ions contained in flame.

Control device 23 can be any control device that can control the system according to the present disclosure. In expressing the subject matter of the invention, not only the control device, but also control means or control device or similar terms may be used to describe one that controls the system according to the present disclosure. Control device 23 can be implemented in various manners. For example, a processor may be used as the control device. In a case where a processor is used as control device 23, various kinds of processing can be executed by causing the processor to read a program from a storage medium storing the program and execute the program. Therefore, processing content can be changed by changing the program stored in the storage medium. This can increase a degree of freedom in changing control content. Examples of the processor include a central processing unit (CPU) and a micro-processing unit (MPU). Examples of the storage medium include a hard disk, a flash memory, and an optical disk. Alternatively, a wired logic in which a program cannot be rewritten may be used as control device 23. Use of a wired logic as control device 23 is effective for improving a processing speed. Examples of the wired logic include an application specific integrated circuit (ASIC). Alternatively, control device 23 may be achieved by combination of a processor and a wired logic. In a case where control device 23 is achieved by combination of a processor and a wired logic, a processing speed can be improved while increasing a degree of freedom of software design. In addition, control device 23 and a circuit having a function different from that of control device 23 may be achieved by one semiconductor element. Examples of the circuit having a different function include an A/D conversion circuit and a D/A conversion circuit. Furthermore, control device 23 may be constituted by one semiconductor element or may be constituted by a plurality of semiconductor elements. In a case where control device 23 is constituted by a plurality of semiconductor elements, controls described in the claims may be achieved by different semiconductor elements. Furthermore, control device 23 may be configured to include a semiconductor element and a passive component such as a resistor or a capacitor.

### [1-2. Basic operation of fuel cell system]

Operation of fuel cell system 1 configured as described above will be described below. At a time of activation of the fuel cell system, the temperature of hydrogen generator 3 is increased by a heater (not illustrated) attached to hydrogen generator 3. When hydrogen generator 3 rises to a temperature necessary for reforming the source gas, the source gas is supplied to hydrogen generator 3, and a hydrogen-rich fuel gas is generated. When the fuel gas is generated by hydrogen generator 3, water in water tank 20 is supplied to hydrogen generator 3 as water necessary for the reforming reaction by driving reforming water supply pump 27.

The fuel gas generated in hydrogen generator 3 is supplied to fuel cell 12, and power is generated by a reaction with the oxidant gas supplied by oxidant gas supplier 13 and humidified by humidifier 14. The fuel gas used for power generation in fuel cell 12 is discharged from fuel cell 12 as an off-fuel gas containing a remaining combustible component that has not been used for cell reaction, and is supplied to combustor 7 after heat recovery and separation of condensed water by condenser 15. The off-fuel gas supplied to combustor 7 is used as combustion gas for maintaining the temperature of hydrogen generator 3. The combustion exhaust gas generated by combustion in combustor 7 is discharged to the outside of housing 2 after heat recovery and separation of condensed water by condenser 18 disposed therebetween.

### [1-3. Protection control]

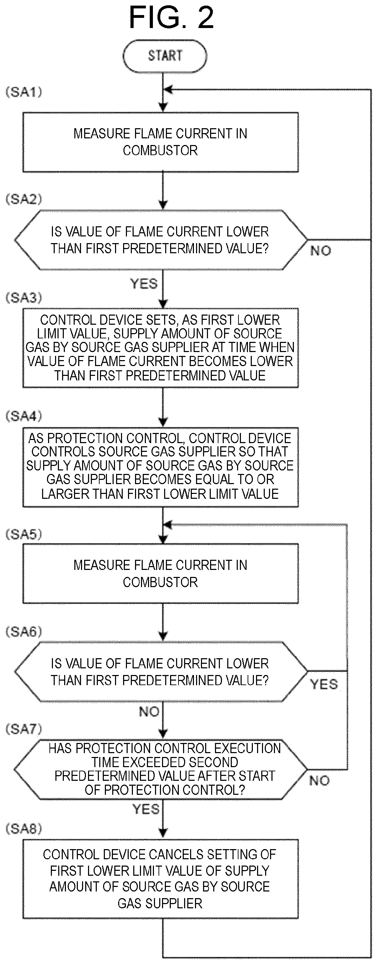

Fig. 2 is a flowchart illustrating protection control of fuel cell system 1 according to the first exemplary embodiment. First, in fuel cell system 1, measurement unit 25 measures a flame current in order to check a combustion state of combustor 7 (step SA1). Control device 23 determines whether or not the measured value of the flame current is lower than a predetermined first predetermined value (step SA2).

The first predetermined value is a value between a value of the flame current during normal operation and a value of the flame current in a fire extinction state. Specifically, the first predetermined value can take various values depending on a size and a structure of fuel cell system 1, a type of the flame rod or detection circuit, and the like. For example, in a case where a threshold value for determining whether or not combustor 7 is in a fire extinction state by fire extinction estimator 24 is 0.3 µA and the value of the flame current during normal operation is 10 µA, the first predetermined value may be set to 0.5 µA.

In a case where the value of the flame current is lower than the first predetermined value (step SA2: YES), control device 23 sets, as a first lower limit value, a supply amount of the source gas by source gas supplier 8 at the time point when the value of the flame current becomes lower than the first predetermined value (step SA3).

Then, as the protection control, control device 23 controls the source gas supplier so that the supply amount of the source gas by source gas supplier 8 becomes equal to or larger than the first lower limit value (step SA4).

In a case where the value of the flame current is not lower than the first predetermined value (step SA2: NO), the processing returns to the measurement of the value of the flame current (step SA1).

Subsequently to step SA4, measurement unit 25 measures the flame current in order to check the combustion state of combustor 7 (step SA5). Control device 23 determines whether or not the measured value of the flame current is lower than the first predetermined value (step SA6). In a case where the value of the flame current is not lower than the first predetermined value (step SA6: NO), control device 23 determines whether a protection execution time measured by timer 26 has exceeded a second predetermined value after the start of the protection control (step SA7). The second predetermined value is, for example, 3 seconds. In a case where the protection execution time has exceeded the second predetermined value (step SA5: YES), control device 23 cancels the setting of the first lower limit value of the supply amount of the source gas by source gas supplier 8 (step SA8), and returns to step SA1.

In a case where the value of the flame current is lower than the first predetermined value in step SA6 (step SA6: YES), the processing returns to step SA5.

In a case where the protection execution time has not exceeded the second predetermined value (step SA6: NO), the processing returns to step SA5.

Although it is determined whether the value of the flame current is lower than the first predetermined value in step SA5 in the flowchart of Fig. 2, the threshold in step SA5 may be set to a value larger than the first predetermined value that is the threshold in step SA2 in order to prevent ON/OFF of the protection control from being repeated in a short time. Specifically, control device 23 may cancel the setting of the first lower limit value of the supply amount of the source gas by source gas supplier 8 in a case where the protection execution time has exceeded the second predetermined value after execution of the protection control and where the value of the flame current has become equal to or larger than a third predetermined value larger than the first predetermined value.

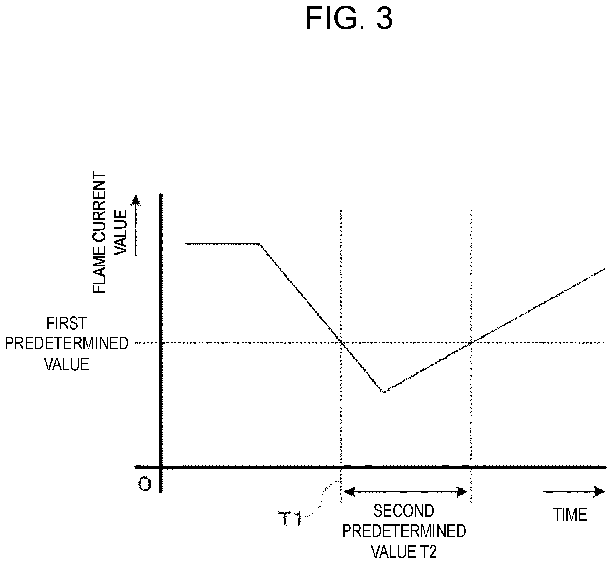

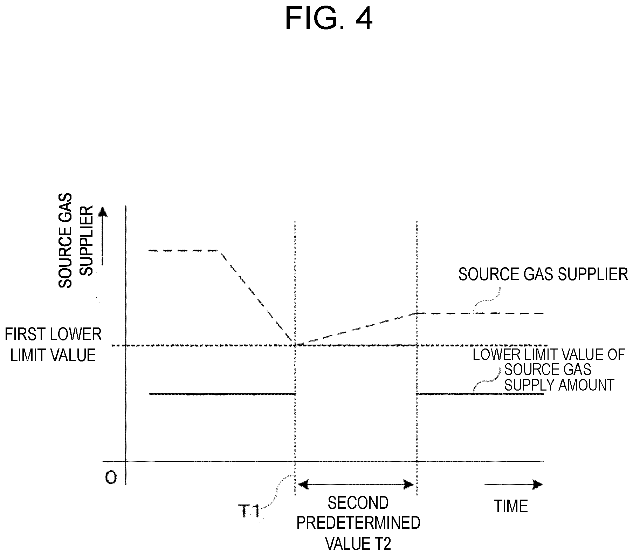

Fig. 3 is an explanatory view for explaining a change in the value of the flame current in fuel cell system 1. It is assumed that the value of the flame current decreases for some reason and becomes lower than the first predetermined value during the operation of fuel cell system 1. In this case, fuel cell system 1 according to the present exemplary embodiment performs the protection control operation before fire extinction estimator 24 determines that combustor 7 is in the fire extinction state. Specifically, a time at which the value of the flame current becomes the first predetermined value is set to T1, and the protection control is performed until the protection control execution time, which is a time for which the protection control is performed, becomes the second predetermined value T2. Specific protection control in fuel cell system 1 according to the present exemplary embodiment will be described with reference to Fig. 4.

Fig. 4 is a graph for explaining a change in source gas supply amount in the protection control performed by fuel cell system 1 according to the first exemplary embodiment. The protection control will be described while also referring to Figs. 2 and 3.

The broken line in the graph indicates a temporal change in the supply amount of the source gas supplied from source gas supplier 8. The solid line in the graph indicates a temporal change of the lower limit value of the supply amount of the source gas determined by control device 23.

When the source gas supply amount decreases and the value of the flame current measured by measurement unit 25 becomes the first predetermined value at the time T1 illustrated in Fig. 3, control device 23 controls source gas supplier 8 as the protection control so that the supply amount of the source gas by source gas supplier 8 becomes equal to or larger than the first lower limit value in accordance with step SA4 of Fig. 2. At the time T 1, control device 23 sets, as the first lower limit value, the supply amount of the source gas by source gas supplier 8 at the time when the value of the flame current becomes lower than the first predetermined value in accordance with step SA3 of Fig. 2.

In a case where the value of the flame current has become equal to or larger than the first predetermined value and where the protection control execution time has exceeded the second predetermined value T2, control device 23 cancels the setting of the first lower limit value of the supply amount of the source gas by source gas supplier 8 in accordance with step SA8 of Fig. 2.

### [1-4. Effects and the like]

As described above, in the present exemplary embodiment, fuel cell system 1 includes hydrogen generator 3 that generates a hydrogen-containing gas from a source gas, source gas supplier 8 that supplies the source gas to hydrogen generator 3, oxidant gas supplier 13 that supplies an oxidant gas necessary for combustion, fuel cell 12 that generates power by using the hydrogen-containing gas on the basis of a power generation command, combustor 7 that is configured to combust an off-fuel gas that is a hydrogen-containing gas not used in fuel cell 12 and heats hydrogen generator 3, measurement unit 25 that measures a flame current in combustor 7, and control device 23 that performs protection control for controlling at least one of a supply amount of the source gas by source gas supplier 8, a supply amount of the oxidant gas by oxidant gas supplier 13, and an output from fuel cell 12 in a case where the value of the flame current measured by measurement unit 25 becomes lower than the first predetermined value.

According to this configuration, fuel cell system 1 performs the protection control before estimating a fire extinction state, thereby reducing the number of times of performing a re-ignition operation, which is performed when the fire extinction state is estimated. Therefore, a risk of failure of the igniter, the circuit, and the like can be reduced. Furthermore, the number of times of stoppage of power generation resulting from estimation of the fire extinction state is reduced. This makes it possible to stably continue power generation, thereby producing an effect of improving energy saving performance.

In the present exemplary embodiment, fuel cell system 1 further includes timer 26 that measures the protection execution time, which is a time during which the protection control is executed, and control device 23 controls at least one of source gas supplier 8, oxidant gas supplier 13, and fuel cell 12 in accordance with the protection execution time measured by timer 26.

According to this configuration, fuel cell system 1 can limit the time for which the protection control is performed. This makes it possible to shorten a time it takes to perform the re-ignition operation in a case where combustor 7 is actually in the fire extinction state. Therefore, the fuel cell can be operated without performing the protection control for an unnecessarily long time.

In the present exemplary embodiment, in fuel cell system 1, as the protection control, control device 23 sets, as the first lower limit value, the supply amount of the source gas by source gas supplier 8 at the time point when the value of the flame current becomes lower than the first predetermined value, and controls source gas supplier 8 so that the supply amount of the source gas becomes equal to or larger than the first lower limit value.

According to this configuration, fuel cell system 1 can continue the supply of the source gas. Therefore, in a case where combustor 7 is not in the fire extinction state, an amount of ions increases and the flame current increases accordingly by waiting for the temperature of the reformer and the like to become an appropriate value. This makes it possible to avoid the re-ignition operation before fire extinction estimator 24 erroneously estimates that combustor 7 is in the fire extinction state. Therefore, a risk of failure of the igniter, the circuit, and the like can be reduced. Furthermore, the number of times of stoppage of power generation resulting from estimation of the fire extinction state is reduced. This makes it possible to stably continue power generation, thereby producing an effect of improving energy saving performance.

In the present exemplary embodiment, in fuel cell system 1, control device 23 cancels the setting of the first lower limit value of the supply amount of the source gas by source gas supplier 8 in a case where the protection execution time has exceeded the second predetermined value after execution of the protection control and where the value of the flame current has become equal to or larger than the first predetermined value.

According to this configuration, fuel cell system 1 can keep the lower limit value of the supply amount of the source gas at a high value only during the necessary protection control, and does not need to supply an unnecessarily large amount of the source gas to fuel cell 12. Therefore, it is possible to achieve both continuation of stable power generation and energy saving.

In the present exemplary embodiment, in fuel cell system 1, control device 23 cancels the setting of the first lower limit value of the supply amount of the source gas by source gas supplier 8 in a case where the protection execution time has exceeded the second predetermined value after execution of the protection control and where the value of the flame current has become equal to or larger than the third predetermined value larger than the first predetermined value.

According to this configuration, fuel cell system 1 can keep the lower limit value of the supply amount of the source gas at a high value only during the necessary protection control, and does not need to supply an unnecessarily large amount of the source gas to fuel cell 12. In addition, it is possible to prevent ON/OFF of the protection control from being repeated in a short time. Therefore, it is possible to achieve both continuation of stable power generation and energy saving.

### (Second exemplary embodiment)

### [2-1. Configuration]

A physical configuration and a basic operation of fuel cell system 1 according to a second exemplary embodiment of the present disclosure are similar to those of fuel cell system 1 according to the first exemplary embodiment, and therefore description thereof is omitted.

### [2-2. Description of protection control]

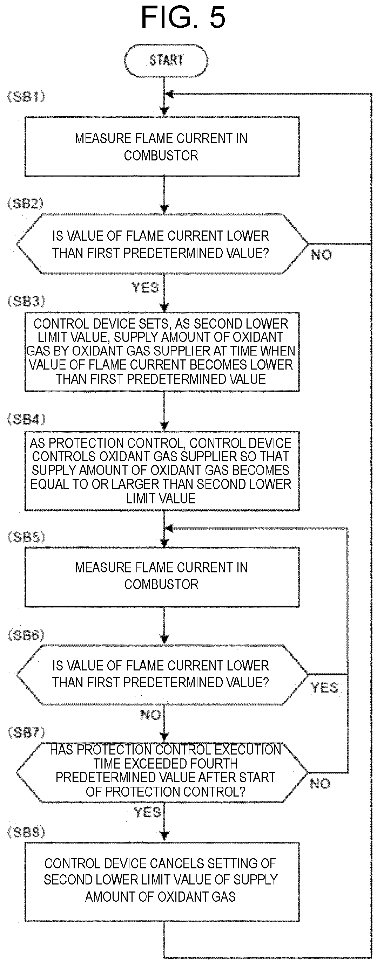

Fig. 5 is a flowchart illustrating control of fuel cell system 1 according to the second exemplary embodiment. First, in fuel cell system 1, measurement unit 25 measures a flame current in order to check a combustion state of combustor 7 (step SB1). Control device 23 determines whether or not the measured value of the flame current is lower than a first predetermined value (step SB2).

The first predetermined value is a value between a value of the flame current during normal operation and a value of the flame current in a fire extinction state. Specifically, the first predetermined value can take various values depending on a size and a structure of fuel cell system 1, a type of the flame rod or detection circuit, and the like. For example, in a case where a threshold value for determining whether or not combustor 7 is in a fire extinction state by fire extinction estimator 24 is 0.3 µA and the value of the flame current during normal operation is 10 µA, the first predetermined value may be set to 0.5 µA.

In a case where the value of the flame current is lower than the first predetermined value (step SB2: YES), control device 23 sets, as a second lower limit value, a supply amount of oxidant gas by oxidant gas supplier 13 at the time point when the value of the flame current becomes lower than the first predetermined value (step SB3).

Then, as the protection control, control device 23 controls oxidant gas supplier 13 so that the supply amount of the oxidant gas becomes equal to or larger than the second lower limit value (step SB4).

In a case where the value of the flame current is not lower than the first predetermined value (step SB2: NO), the processing returns to the measurement of the value of the flame current (step SB1).

Subsequently to step SB4, measurement unit 25 measures the flame current in order to check the combustion state of combustor 7 (step SB5). Control device 23 determines whether or not the measured value of the flame current is lower than the first predetermined value (step SB6). In a case where the value of the flame current is not lower than the first predetermined value (step SB6: NO), control device 23 determines whether a protection execution time measured by timer 26 control has exceeded a fourth predetermined value after the start of the protection (step SB7). The third predetermined value is, for example, 3 seconds. In a case where the protection execution time has exceeded the fourth predetermined value (step SB5: YES), control device 23 cancels the setting of the second lower limit value of the supply amount of the oxidant gas by oxidant gas supplier 13 (step SB8), and returns to step SB 1.

In a case where the value of the flame current is lower than the first predetermined value in step SB6 (step SB6: YES), the processing returns to step SB5.

In a case where the protection execution time has not exceeded the fourth predetermined value (step SB7: NO), the processing returns to step SB5.

Although it is determined whether the value of the flame current is lower than the first predetermined value in step SB5 in the flowchart of Fig. 5, the threshold in step SB5 may be set to a value larger than the first predetermined value that is the threshold in step SB2 in order to prevent ON/OFF of the protection control from being repeated in a short time. Specifically, control device 23 may cancel the setting of the second lower limit value of the supply amount of the oxidant gas by oxidant gas supplier 13 in a case where the protection execution time has exceeded the fourth predetermined value after execution of the protection control and where the value of the flame current has become equal to or larger than a fifth predetermined value larger than the first predetermined value.

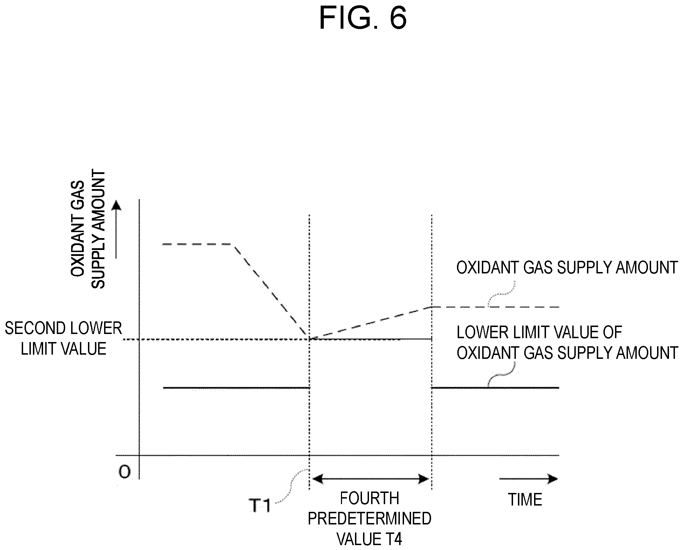

Fig. 6 is a graph for explaining a change in oxidant gas supply amount in fuel cell system 1 according to the second exemplary embodiment. The protection control will be described while also referring to Figs. 3 and 5.

The broken line in the graph indicates a temporal change in the supply amount of the oxidant gas supplied from oxidant gas supplier 13. The solid line in the graph indicates a temporal change of the lower limit value of the supply amount of the oxidant gas determined by control device 23.

When the oxidant gas supply amount decreases and the value of the flame current measured by measurement unit 25 becomes the first predetermined value at the time T1 illustrated in Fig. 3, control device 23 controls oxidant gas supplier 13 as the protection control so that the supply amount of the oxidant gas by oxidant gas supplier 13 becomes equal to or larger than the second lower limit value in accordance with step SB4 of Fig. 5. At the time T 1, control device 23 sets, as the second lower limit value, the supply amount of the oxidant gas by oxidant gas supplier 13 at the time when the value of the flame current becomes lower than the first predetermined value in accordance with step SB3 of Fig. 5.

In a case where the value of the flame current has become equal to or larger than the first predetermined value and where the protection control execution time has exceeded the fourth predetermined value T4, control device 23 cancels the setting of the second lower limit value of the supply amount of the oxidant gas by oxidant gas supplier 13 in accordance with step SB6 of Fig. 5.

In the present exemplary embodiment, in fuel cell system 1, as the protection control, control device 23 sets, as the second lower limit value, the supply amount of the oxidant gas by oxidant gas supplier 13 at the time point when the value of the flame current becomes lower than the first predetermined value, and controls oxidant gas supplier 13 so that the supply amount of the oxidant gas becomes equal to or larger than the second lower limit value.

According to this configuration, fuel cell 12 of fuel cell system 1 increases an output, and as a result, a hydrogen concentration of an off-fuel gas decreases, and the value of the flame current increases. This makes it possible to increase the value of the flame current and indicate that combustor 7 is in a normal combustion state before fire extinction estimator 24 erroneously determines that combustor 7 is in a fire extinction state, thereby producing an effect of decreasing the number of times of re-ignition operation.

In the present exemplary embodiment, in fuel cell system 1, control device 23 cancels the setting of the second lower limit value of the supply amount of the oxidant gas by oxidant gas supplier 13 in a case where the protection execution time has exceeded the fourth predetermined value T4 after execution of the protection control and where the value of the flame current has become equal to or larger than the first predetermined value.

According to this configuration, fuel cell system 1 can keep the lower limit value of the supply amount of the oxidant gas at a high value only during the necessary protection control, and does not need to supply an unnecessarily large amount of the oxidant gas to fuel cell 12. Therefore, it is possible to achieve both continuation of stable power generation and energy saving.

In the present exemplary embodiment, in fuel cell system 1, control device 23 cancels the setting of the second lower limit value of the supply amount of the oxidant gas by oxidant gas supplier 13 in a case where the protection execution time has exceeded the fourth predetermined value after execution of the protection control and where the value of the flame current has become equal to or larger than the fifth predetermined value larger than the first predetermined value.

According to this configuration, fuel cell system 1 can keep the lower limit value of the supply amount of the oxidant gas at a high value only during the necessary protection control, and does not need to supply an unnecessarily large amount of the oxidant gas to fuel cell 12. In addition, it is possible to prevent ON/OFF of the protection control from being repeated in a short time. Therefore, it is possible to achieve both continuation of stable power generation and energy saving.

### (Third exemplary embodiment)

### [3-1. Configuration]

A physical configuration and a basic operation of fuel cell system 1 according to a third exemplary embodiment of the present disclosure are similar to those of fuel cell system 1 according to the first exemplary embodiment, and therefore description thereof is omitted.

### [3-2. Description of protection control]

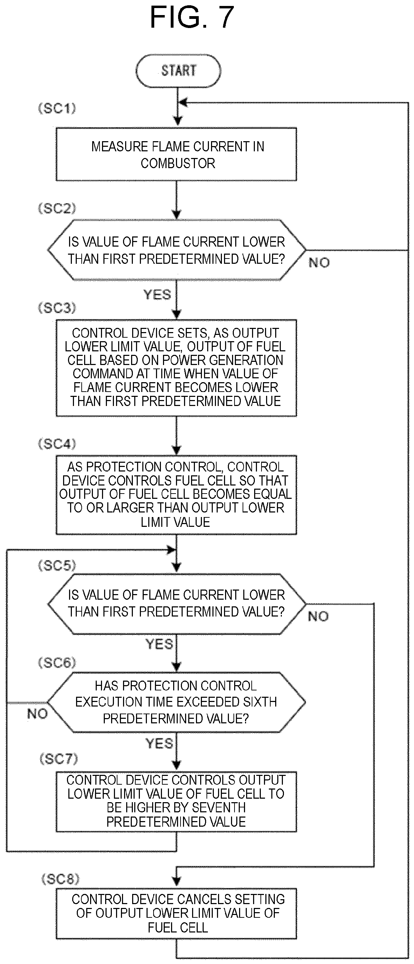

Fig. 7 is a flowchart illustrating control of fuel cell system 1 according to the third exemplary embodiment. First, in fuel cell system 1, measurement unit 25 measures a flame current in order to check a combustion state of combustor 7 (step SC1). Control device 23 determines whether or not the measured value of the flame current is lower than a first predetermined value (step SC2).

The first predetermined value is a value between a value of the flame current during normal operation and a value of the flame current in a fire extinction state. Specifically, the first predetermined value can take various values depending on a size and a structure of fuel cell system 1, a type of the flame rod or detection circuit, and the like. For example, in a case where a threshold value for determining whether or not combustor 7 is in a fire extinction state by fire extinction estimator 24 is 0.3 µA and the value of the flame current during normal operation is 10 µA, the first predetermined value may be set to 0.5 µA.

In a case where the value of the flame current is lower than the first predetermined value (step SC2: YES), control device 23 sets, as an output lower limit value, an output of fuel cell 12 based on a power generation command at the time point when the value of the flame current becomes lower than the first predetermined value (step SC3).

As the protection control, control device 23 controls the fuel cell so that the output of the fuel cell becomes equal to or larger than the output lower limit value (step SC4).

In a case where the value of the flame current is not lower than the first predetermined value (step SC2: NO), the processing returns to the measurement of the value of the flame current (step SC1).

Next, measurement unit 25 measures the flame current, and control device 23 determines whether or not the measured value of the flame current is lower than the first predetermined value (step SC5). In a case where the value of the flame current is lower than the first predetermined value (step SC5: YES), it is determined whether or not a time of the protection control measured by timer 26 has exceeded a sixth predetermined value (step SC6). The sixth predetermined value is, for example, 3 seconds. In a case where the protection execution time has exceeded the sixth predetermined value (step SC6: YES), control device 23 controls the fuel cell so that the output lower limit value of the fuel cell becomes higher by a seventh predetermined value (step SC7). Then, the processing returns to step SC5.

In a case where the protection execution time has not exceeded the sixth predetermined value (step SC6: NO), the processing returns to the process for determining whether or not the value of the flame current is lower than the first predetermined value (step SC5).

In a case where the value of the flame current is not lower than the first predetermined value (step SC5: NO), control device 23 cancels the setting of the output lower limit value of fuel cell 12 (step SC8), and the processing returns to step SC1.

Although it is determined whether the value of the flame current is lower than the first predetermined value in step SC5 in the flowchart of Fig. 7, the threshold in step SC5 may be set to a value larger than the first predetermined value that is the threshold in step SC2 in order to prevent ON/OFF of the protection control from being repeated in a short time. Specifically, control device 23 may cancel the setting of the output lower limit value in a case where the protection execution time has exceeded the sixth predetermined value after execution of the protection control and where the value of the flame current has become equal to or larger than an eighth predetermined value larger than the first predetermined value.

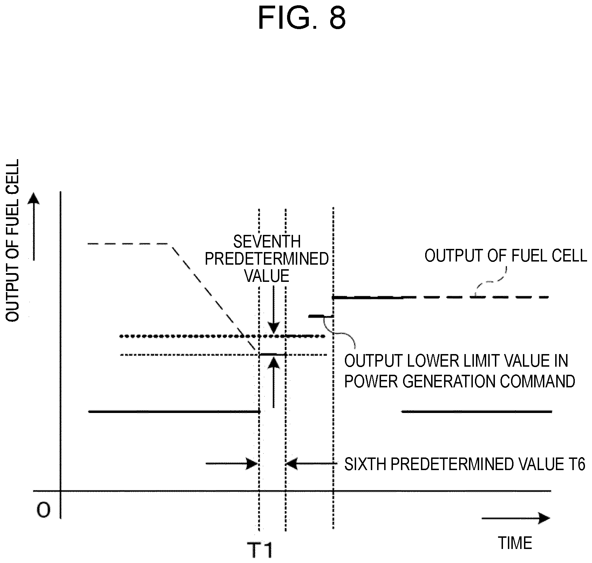

Fig. 8 is a graph for explaining a change in output value in fuel cell system 1 according to the third exemplary embodiment. The protection control will be described while also referring to Figs. 3 and 7.

The broken line in the graph indicates a temporal change of the output of fuel cell 12. The solid line in the graph indicates a temporal change of the lower limit value of the output of fuel cell 12 in the power generation command determined by control device 23.

When the output of fuel cell 12 decreases and the value of the flame current measured by measurement unit 25 becomes lower than the first predetermined value at the time T1 illustrated in Fig. 3, control device 23 controls the fuel cell as the protection control so that the output of the fuel cell becomes equal to or larger than the output lower limit value in accordance with step SC4 of Fig. 7. At the time T1, control device 23 sets, as the output lower limit value, the output of fuel cell 12 at the time when the value of the flame current becomes lower than the first predetermined value in accordance with step SC3 of Fig. 7.

Next, in a case where the value of the flame current becomes equal to or larger than the first predetermined value and the protection execution time has exceeded the sixth predetermined value T6, control device 23 controls the output lower limit value of the fuel cell to be higher by the seventh predetermined value. Thereafter, this control is repeated until the value of the flame current measured by measurement unit 25 becomes equal to or larger than the first predetermined value. Then, control device 23 cancels the setting of the output lower limit value of fuel cell 12.

In the present exemplary embodiment, in fuel cell system 1, as the protection control, control device 23 sets, as the output lower limit value, the output of fuel cell 12 based on a power generation command at the time point when the value of the flame current becomes lower than the first predetermined value, and controls fuel cell 12 so that the output of fuel cell 12 becomes equal to or larger than the output lower limit value.

According to this configuration, fuel cell 12 of fuel cell system 1 increases an output, and as a result, a hydrogen concentration of an off-fuel gas decreases, and the value of the flame current increases. This makes it possible to increase the value of the flame current and indicate that combustor 7 is in a normal combustion state before fire extinction estimator 24 erroneously determines that combustor 7 is in a fire extinction state, thereby producing an effect of decreasing the number of times of re-ignition operation.

In the present exemplary embodiment, in fuel cell system 1, control device 23 controls fuel cell 12 so that the output lower limit value of fuel cell 12 becomes higher by the seventh predetermined value in a case where the protection execution time has exceeded the sixth predetermined value after execution of the protection control and where the value of the flame current is lower than the first predetermined value.

According to this configuration, fuel cell system 1 fixes the value of the output during the sixth predetermined value, which is a response time in which the value of the flame current changes in response to the change in output of the fuel cell, and thus only needs to increase the output of the fuel cell by a necessary and sufficient amount. Therefore, it is possible to achieve both continuation of stable power generation and energy saving.

In the present exemplary embodiment, in fuel cell system 1, control device 23 cancels the setting of the output lower limit value in a case where the protection execution time has exceeded the sixth predetermined value after execution of the protection control and where the value of the flame current has become equal to or larger than the first predetermined value.

According to this configuration, fuel cell system 1 can keep the output lower limit value at a high value only during the necessary protection control, and fuel cell 12 does not need to keep an unnecessarily large output. Therefore, it is possible to achieve both continuation of stable power generation and energy saving.

In the present exemplary embodiment, in fuel cell system 1, control device 23 cancels the setting of the output lower limit value in a case where the protection execution time has exceeded the sixth predetermined value after execution of the protection control and where the value of the flame current has become equal to or larger than the eighth predetermined value larger than the first predetermined value.

According to this configuration, fuel cell system 1 can keep the output lower limit value at a high value only during the necessary protection control, and fuel cell 12 does not need to keep an unnecessarily large output. In addition, it is possible to prevent ON/OFF of the protection control from being repeated in a short time. Therefore, it is possible to achieve both continuation of stable power generation and energy saving.

The first, second, and third exemplary embodiments have been described above as examples of the technique disclosed in the present application. However, the techniques in the present disclosure are not limited to the above exemplary embodiments, and can also be applied to exemplary embodiments in which change, substitution, addition, omission, and the like are performed. Further, a new exemplary embodiment may be made by combining the components described in the first, second, and third exemplary embodiments.

For example, the step units of the control operation illustrated in Figs. 2, 5, and 7 are divided according to main processing contents in order to facilitate understanding of the operation of each unit of fuel cell system 1, and the present invention is not limited by the way of division or names of the processing units. The processing may be divided into more step units depending on the processing contents. Furthermore, one step unit may be divided so as to include more processes. Furthermore, the order of the steps may be appropriately changed without departing from the gist of the present invention.

### INDUSTRIAL APPLICABILITY

The present disclosure is generally applicable to a fuel cell system having a combustor.

### REFERENCE MARKS IN THE DRAWINGS

- 1: fuel cell system
- 2: housing
- 3: hydrogen generator
- 4: reformer
- 5: CO converter
- 6: CO remover
- 7: combustor
- 8: source gas supplier
- 9: source gas flow rate meter
- 10: combustion air supplier
- 11: combustion air flow rate meter
- 12: fuel cell
- 13: oxidant gas supplier
- 14: humidifier
- 15: condenser
- 16: condenser
- 17: condensed water tank
- 18: condenser
- 19: water supply pump
- 20: water tank
- 21: cooling water circulation pump
- 22: heat exchanger
- 23: control device
- 24: fire extinction estimator
- 25: measurement unit
- 26: timer
- 27: reforming water supply pump

## Claims

1. A fuel cell system comprising:
a hydrogen generator that generates a hydrogen-containing gas from a source gas;
a source gas supplier that supplies the source gas to the hydrogen generator;
an oxidant gas supplier that supplies an oxidant gas necessary for combustion;
a fuel cell that generates power by using the hydrogen-containing gas based on a power generation command;
a combustor that is configured to combust an off-fuel gas that is the hydrogen-containing gas that has not used in the fuel cell, and heats the hydrogen generator;
a measurement unit that measures a flame current in the combustor; and
a control device that performs protection control for controlling at least one of a supply amount of the source gas by the source gas supplier, a supply amount of the oxidant gas by the oxidant gas supplier, and an output of the fuel cell in a case where a value of the flame current measured by the measurement unit becomes lower than a first predetermined value.

2. The fuel cell system according to Claim 1, further comprising a timer that measures a protection execution time that is a time for which the protection control is performed, wherein the control device controls at least one of the source gas supplier, the oxidant gas supplier, and the fuel cell in accordance with the protection execution time measured by the timer.

3. The fuel cell system according to Claim 2, wherein as the protection control, the control device sets, as a first lower limit value, a supply amount of the source gas by the source gas supplier at a time point when the value of the flame current becomes lower than the first predetermined value and controls the source gas supplier to cause the supply amount of the source gas to become equal to or larger than the first lower limit value.

4. The fuel cell system according to Claim 3, wherein the control device cancels the setting of the first lower limit value of the supply amount of the source gas by the source gas supplier in a case where the protection execution time has exceeded a second predetermined value after the execution of the protection control and the value of the flame current has become equal to or larger than the first predetermined value.

5. The fuel cell system according to Claim 3, wherein the control device cancels the setting of the first lower limit value of the supply amount of the source gas by the source gas supplier in a case where the protection execution time has exceeded a second predetermined value after the execution of the protection control and the value of the flame current has become equal to or larger than a third predetermined value larger than the first predetermined value.

6. The fuel cell system according to Claim 2, wherein as the protection control, the control device sets, as a second lower limit value, a supply amount of the oxidant gas by the oxidant gas supplier at a time point when the value of the flame current becomes lower than the first predetermined value and controls the oxidant gas supplier to cause the supply amount of the oxidant gas to become equal to or larger than the second lower limit value.

7. The fuel cell system according to Claim 6, wherein the control device cancels the setting of the second lower limit value of the supply amount of the oxidant gas by the oxidant gas supplier in a case where the protection execution time has exceeded a fourth predetermined value after the execution of the protection control and the value of the flame current has become equal to or larger than the first predetermined value.

8. The fuel cell system according to Claim 6, wherein the control device cancels the setting of the second lower limit value of the supply amount of the oxidant gas by the oxidant gas supplier in a case where the protection execution time has exceeded a fourth predetermined value after the execution of the protection control and the value of the flame current has become equal to or larger than a fifth predetermined value larger than the first predetermined value.

9. The fuel cell system according to Claim 2, wherein as the protection control, the control device sets, as an output lower limit value, an output of the fuel cell based on the power generation command at a time point when the value of the flame current becomes lower than the first predetermined value and controls the fuel cell to cause the output of the fuel cell to become equal to or larger than the output lower limit value.

10. The fuel cell system according to Claim 9, wherein the control device controls the fuel cell to cause the output lower limit value of the fuel cell to become higher by a seventh predetermined value in a case where the protection execution time has exceeded a sixth predetermined value after the execution of the protection control and the value of the flame current is lower than the first predetermined value.

11. The fuel cell system according to Claim 10, wherein the control device cancels the setting of the output lower limit value in a case where the protection execution time has exceeded the sixth predetermined value after the execution of the protection control and the value of the flame current has become equal to or larger than the first predetermined value.

12. The fuel cell system according to Claim 10, wherein the control device cancels the setting of the output lower limit value in a case where the protection execution time has exceeded the sixth predetermined value after the execution of the protection control and the value of the flame current has become equal to or larger than an eighth predetermined value larger than the first predetermined value.
